# EUROPÄISCHE PATENTSCHRIFT

(11) **EP 2 676 713 B1**
(45) Veröffentlichungstag und Bekanntmachung des Hinweises auf die Patenterteilung: **25.04.2018**
(21) Anmeldenummer: 13172587.1
(22) Anmeldetag: 19.06.2013
(51) Int. Cl.: B01D 46/10, B01D 46/24, B01D 46/52

(54) **Gasfiltereinsatz**
Gas filter insert
Insert de filtre à gaz

(30) Priorität: 22.06.2012 DE 102012012347
(43) Veröffentlichungstag der Anmeldung: 25.12.2013
(73) Patentinhaber: MANN + HUMMEL GMBH, 71636 Ludwigsburg (DE)
(72) Erfinder: Kusebauch, Robert, 94405 Landau (DE); Launer, Ulrich, 70469 Stuttgart (DE); Heim, Michael, 28277 Charlotte/N.C. (US); Bartel, Frank, 84130 Dingolfing (DE)

(56) Entgegenhaltungen:
- EP-B1- 2 152 385
- DE-A1-102010 023 973
- GB-A- 2 162 087

## Beschreibung

### Technisches Gebiet

Die Erfindung bezieht sich auf einen Gasfiltereinsatz nach dem Oberbegriff des Anspruches 1.

### Stand der Technik

Ein Gasfiltereinsatz, der in einem Luftfilter für Brennkraftmaschinen eingesetzt wird, wird in der EP 2 152 385 B1 beschrieben. Der Filtereinsatz weist einen U-förmigen Filterkörper auf, der als Faltenfilter ausgebildet ist und in einem zweiteiligen Filtergrundkörper aus Kunststoff aufgenommen ist. Der Filterkörper wird radial von außen nach innen von der herangeführten Umgebungsluft durchströmt, die Ableitung der gereinigten Luft erfolgt axial aus dem zwischen den Schenkeln des Filterkörpers liegenden Reinraum.

Der Filtergrundkörper, an welchem der Faltenfilter gehalten ist, besteht aus einer unteren und einer oberen Gehäuseschale, zwischen denen der U-förmige Faltenfilter aufgenommen ist. Zur Herstellung wird der Faltenfilter zwischen den Gehäuseschalen eingeklemmt und anschließend ein Schweißvorgang durchgeführt, so dass die Stirnkanten des Faltenfilters, die an der oberen und unteren Schale anliegen, mit diesen fest verbunden werden.

### Offenbarung der Erfindung

Der Erfindung liegt die Aufgabe zugrunde, einen konstruktiv einfach aufgebauten, in einfacher Weise herzustellenden Gasfiltereinsatz anzugeben.

Diese Aufgabe wird erfindungsgemäß mit den Merkmalen des Anspruches 1 gelöst. Die Unteransprüche geben zweckmäßige Weiterbildungen an.

Die Erfindung bezieht sich auf einen Gasfiltereinsatz zur Filtration gasförmiger Medien, beispielsweise einen Luftfiltereinsatz für eine Brennkraftmaschine, um die den Zylindern der Brennkraftmaschine zuzuführende Verbrennungsluft einer Filtration zu unterziehen. Der Gasfiltereinsatz kommt in Filtereinrichtungen zur Anwendung, insbesondere in Luftfiltern für Brennkraftmaschinen.

Der Gasfiltereinsatz weist als Filterkörper einen U-förmigen Faltenfilter auf, der aus einem gefalteten Filtermedium besteht, insbesondere aus einem gefalteten Filterpapier. Der Faltenfilter wird üblicherweise radial von außen nach innen von dem zu reinigenden Gas durchströmt, so dass der Zwischenraum zwischen den beiden Schenkeln des Faltenfilters den Reinraum bildet, aus dem das gereinigte Gas üblicherweise axial, also parallel zu den Schenkeln abgeleitet wird.

Der U-förmige Faltenfilter ist in einem Filtergrund- bzw. Filterträgerkörper aufgenommen, welcher zweckmäßigerweise als Kunststoff-Bauteil ausgebildet ist. Der Filtergrundkörper besitzt einen Aufnahmeraum zur Aufnahme des Faltenfilters, wobei der Aufnahmeraum auf der radialen Außenseite zweckmäßigerweise offen ausgebildet ist, um die Anströmung radial von außen hinderungsfrei zu ermöglichen. Außerdem kann bei dieser Ausführung der Faltenfilter bei der Montage von außen nach innen in den Aufnahmeraum entlang der Längsachse des Filtereinsatzes eingeschoben werden.

Der Faltenfilter ist zickzackförmig gefaltet, wobei sich die Falten, die sich an den Schenkeln des Faltenfilters befinden, annähernd in Radialrichtung, also quer zur Längsachse des Filtereinsatzes erstrecken bzw. zur Querrichtung einen kleinen Winkel einnehmen. Jede Falte weist eine obere und untere Stirnkante auf, die eine entsprechende Ausrichtung quer zur Längsachse aufweist. Im Bereich des verbindenden Bogens zwischen den beiden Schenkeln des U-förmigen Faltenfilters weisen die einzelnen Falten bzw. die Stirnkanten der Falten eine hiervon abweichende Winkelposition zur Längsachse auf, wobei in Achsrichtung liegende Falten, die im Bereich des Grundes der U-Form angeordnet sind, zumindest annähernd parallel zur Längsachse ausgerichtet sind.

Der Filtergrundkörper ist als ein einteiliges bzw. einstückiges Bauteil ausgeführt, welches im Falle einer Ausführung als Kunststoffteil bevorzugt im Spritzgießverfahren hergestellt wird. Eine obere und eine untere Schale des Filtergrundkörpers sind einteilig ausgeführt. Des Weiteren ist im Filtergrundkörper ein Befestigungsfuß vorgesehen, welcher ebenfalls einteiliger Bestandteil des Filtergrundkörpers ist und zur Befestigung des Filtereinsatzes im Filtergehäuse der Filtereinrichtung dient. Der Befestigungsfuß erstreckt sich zwischen der oberen und der unteren Schale des Filtergrundkörpers und befindet sich zwischen den zueinander beabstandeten Schenkeln des Faltenfilters. Auf diese Weise ist eine Platz sparende Befestigung realisierbar. Der Zwischenraum zwischen den Schenkeln stellt üblicherweise den Reinraum dar, der axial von den beiden beabstandeten Schalen des Filtergrundkörpers begrenzt ist und radial nach außen von der Innenseite des Faltenfilters. Durch diesen Reinraum erstreckt sich der Befestigungsfuß hindurch.

Diese Ausführung hat des Weiteren den Vorteil, dass die Filtereinrichtung flach bauen kann, da das U-förmige Filterelement, also der Faltenfilter, radial durchströmt wird und grundsätzlich eine verhältnismäßig geringe axiale Höhe des Faltenfilters genügt. Dementsprechend eignet sich die Filtereinrichtung für einen Einsatz bei beschränkter axialer Höhe.

Aufgrund der Einteiligkeit des Filtergrundkörpers ist zudem die Dichtigkeit des Reinraums zwischen oberer und unterer Schale auch ohne aufwändige Abdichtmaßnahmen gegeben. Im Gegensatz zu mehrteiligen Filtergrundkörpern besteht auch keine Gefahr, dass während des Betriebs durch Vibrationen oder Schläge sich einzelne Bestandteile des Filtergrundkörpers voneinander lösen und hierdurch Fehlluftströme zwischen Roh-und Reinseite des Filterelementes auftreten.

Gemäß einer weiteren zweckmäßigen Ausführung ist vorgesehen, dass der Befestigungsfuß als ein Hohlfuß ausgebildet ist. Der Hohlfuß weist einen nach außen offenen Innenraum auf, der ggf. sich über die gesamte axiale Länge des Hohlfußes und des Filtergrundkörpers erstrecken kann. In den Hohlfuß kann ein komplementär ausgebildetes Befestigungselement, welches mit dem Filtergehäuse verbunden ist, eingeführt werden, um den Filtereinsatz im Filtergehäuse zu fixieren. Der Innenraum des Hohlfußes liegt außerhalb des Reinraums im Filtergrundkörper, wobei aufgrund der Einteiligkeit des Hohlfußes mit dem Filtergrundkörper keine Abdichtmaßnahmen erforderlich sind.

Gemäß einer weiteren zweckmäßigen Ausführung ist an dem Filtergrundkörper eine Stirnflanschplatte angeordnet, welche die Reinseite des Filterelementes von der Umgebung separiert, wobei in die Stirnflanschplatte eine Abströmöffnung zur Ableitung des gereinigten Fluids eingebracht ist. Die Stirnflanschplatte ist zweckmäßigerweise ebenfalls einteilig mit dem Filtergrundkörper ausgebildet. Ggf. kommt aber auch eine Ausführung als separates Bauteil in Betracht, das mit dem Filtergrundkörper dicht verbunden wird. Die Abströmöffnung in der Stirnflanschplatte ist mit einem Stutzen verbunden, an den ein Ableitungsrohr anschließbar ist. Der Stutzen kann als Spritzgussbauteil ausgeführt sein und beispielsweise aus PUR (Polyurethan) bestehen, das an die Flanschplatte angespritzt ist.

Gemäß einer weiteren zweckmäßigen Ausführung ist die an den Stirnseiten der Schenkel liegende Endfalte des Faltenfilters im montieren Zustand dicht mit der Stirnflanschplatte verbunden. Hierdurch sollen Fehlluftströme unmittelbar zwischen Roh- und Reinseite des Filterelementes verhindert werden. Es kommen grundsätzlich verschiedenartige Verbindungsmaßnahmen in Betracht, beispielsweise ein Verschweißen der Endfalte mit der Stirnflanschplatte oder eine Verbindung über ein Dichtungselement, beispielsweise eine angespritzte Dichtraupe. Die Endfalte des Faltenfilters kann an der Außenseite der Flanschplatte anliegen und dort mit der Stirnflanschplatte verbunden sein. Alternativ kommt auch eine Verbindung an einer Stirnkante der Stirnflanschplatte in Betracht, beispielsweise indem in die Stirnkante eine Nut eingebracht ist, in die die Endfalte einragt, wobei in der Nut die Endfalte dicht gehalten ist, beispielsweise über ein Dichtelement, durch Verschweißen oder Verkleben. Möglich ist es außerdem, dass die Endfalte an der Innenseite der Stirnflanschplatte anliegt und dort mit der Stirnflanschplatte verbunden ist.

Gemäß einer weiteren zweckmäßigen Ausführung ist der Faltenfilter an seinen Stirnkanten dicht abgedichtet. Der Faltenfilter kann stirnkantverleimt ausgeführt sein, beispielsweise mittels eines aufgeschäumten Polyurethans (PU). Auch im Bereich der Endfalte kann der Faltenfilter dicht ausgebildet sein, indem die Endfalte beispielsweise über Hotmelt abgedichtet wird.

Erfindungsgemäß ist der Aufnahmeraum im Bereich der oben und unten liegenden Stirnkanten des Faltenfilters von Deckscheiben überdeckt, die mit dem Filtergrundkörper verbunden sind. Erfindungsgemäß ist mindestens eine Deckscheibe an den Filtergrundkörper angegossen. Die mindestens eine Deckscheibe ist erfindungsgemäß zumindest teilweise an den Filtergrundkörper angegossen.

Die Deckscheibe kann, gemäß einer weiteren zweckmäßigen Ausführung, zumindest teilweise, vorzugweise ein Deckscheibenrand, als ein Dichtelement ausgeführt sein, dessen Dichtmasse mit den Stirnkanten der Falten des Faltenfilters verbunden ist.

Das Dichtelement kann außerdem mit dem Filtergrundkörper verbunden sein. Diese Ausführung hat den Vorteil, dass mit dem Dichtelement zwei verschiedene Funktionen erreicht werden können: Zum einen erfolgt eine dichte Abdichtung an den Stirnkanten, so dass Fehlluftströme zwischen Roh- und Reinseite des Filterkörpers vermieden werden. Zum anderen ist der Faltenfilter über das Dichtelement sicher und fest am Filtergrundkörper gehalten. Dadurch erübrigen sich sonstige Maßnahmen zur Verbindung des Faltenfilters mit dem Filtergrundkörper. Es ist insbesondere nicht erforderlich, den Faltenfilter mit dem Filtergrundkörper zu verschweißen, zu verkleben oder in sonstiger Weise unmittelbar zu verbinden. Die Anbindung des Faltenfilters an den Filtergrundkörper erfolgt vielmehr durch das Einsetzen in den Aufnahmeraum am Filtergrundkörper und mittelbar über das Dichtelement, das sowohl mit dem Faltenfilter als auch mit dem Filtergrundkörper verbunden ist.

Die Dichtmasse des Dichtelementes erstreckt sich vorzugsweise über die gesamte Länge der Stirnkante, wobei grundsätzlich auch Ausführungen in Betracht kommen, bei denen sich die Dichtmasse nur über eine Teillänge der Stirnkante erstreckt. Des Weiteren ist es zweckmäßig, an beiden gegenüberliegenden Stirnkanten des Faltenfilters jeweils eine Dichtmasse in Form eines Dichtelementes vorzusehen. Auf diese Weise wird an beiden gegenüberliegenden Stirnkanten eine Abdichtung zwischen Roh- und Reinseite erreicht und außerdem der Faltenfilter an beiden gegenüberliegenden Stirnkanten mit dem Filtergrundkörper verbunden.

Der Aufnahmeraum am Filtergrundkörper, in dem der Faltenfilter aufgenommen ist, weist mindestens ein Stützelement im Bereich der Stirnkanten des Faltenfilters auf, über das der Faltenfilter zusätzlich im Aufnahmeraum am Filtergrundkörper gehalten wird. Das Dichtelement ist mit diesem Stützelement verbunden, so dass die Verbindung zwischen dem Faltenfilter und dem Filtergrundkörper über das Dichtelement und weiter über das Stützelement erfolgt, das am Filtergrundkörper angeordnet ist. Bei dem Stützelement handelt es sich um ein einteilig bzw. einstückig mit dem Filtergrundkörper ausgebildetes Bauteil, beispielsweise in Form einer bogenförmigen Stützschlaufe. In der Ausführung des Filtergrundkörpers als Kunststoffbauteil kann das Stützelement an den Filtergrundkörper angegossen bzw. angespritzt sein.

Zweckmäßigerweise sind über die Länge der U-Form gesehen mehrere Stützelemente angeordnet, insbesondere im Bereich beider gegenüberliegender Stirnkanten des Faltenfilters, so dass der Faltenfilter oben und unten von den Stützelementen begrenzt ist und radial nach innen eventuell an einem Absatz am Filtergrundkörper anliegt. Zusätzlich kann auf der radialen Innenseite des Faltenfilters eine Wandung des Filtergrundkörpers vorgesehen sein, die ausreichend große Strömungsöffnungen aufweist, damit sich eine radiale Strömung durch den Faltenfilter ausbreiten kann. Das Dichtelement erstreckt sich vorzugsweise ebenfalls entlang der U-Form an den Stirnkanten des Faltenfilters, wobei die Dichtmasse des Dichtelementes den Faltenfilter im Bereich der Stirnkanten abdichtet, so dass nur eine radiale Strömung durch den Faltenfilter möglich ist, nicht jedoch eine Leckageströmung über die Stirnkanten.

Gemäß einer weiteren zweckmäßigen Ausführung ist vorgesehen, dass das Dichtelement an das Stützelement angegossen ist. Bei der Dichtmasse des Dichtelementes handelt es sich insbesondere um ein gießfähiges Material, beispielsweise um einen PUR-Schaum (Polyurethan). Über das Angießen des Dichtelementes an das Stützelement wird eine feste Verbindung zum Filtergrundkörper geschaffen. Auch die Verbindung zu den Stirnkanten des Faltenfilters ist ausreichend fest und dauerhaft und lässt sich mittels des gießfähigen Dichtmaterials leicht herstellen.

Das Stützelement bzw. die Stützelemente besitzen zweckmäßigerweise eine Ausnehmung, die von der Dichtmasse ausgefüllt ist, wodurch die Anbindung des Dichtelementes an das Stützelement und an den Filtergrundkörper verbessert ist. In der Ausbildung der Stützelemente in Form ohrenförmiger Stützschlaufen weisen die Stützelemente sichelförmige Ausnehmungen auf, die von der Dichtmasse ausgefüllt sind.

Gemäß einer weiteren zweckmäßigen Ausführung ist vorgesehen, dass die dem freien Ende der Schenkel der U-Form benachbarte Stirnfalte des Faltenfilters mit dem Filtergrundkörper oder einem mit dem Filtergrundkörper verbundenen Bauteil dicht verbunden ist. Hierdurch soll sichergestellt werden, dass im Bereich der freien Schenkel der U-Form keine Fehlluftströme zwischen Roh- und Reinseite entstehen. Die Anbindung der ersten Falte des Faltenfilters an den Filtergrundkörper bzw. dem damit verbundenen Bauteil erfolgt beispielsweise über eine Klebe- oder Dichtraupe.

Der Filtergrundkörper ist als ein einteiliges Bauteil insbesondere aus Kunststoff ausgeführt.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: in perspektivischer Ansicht einen Gasfiltereinsatz mit einem U-förmigen Faltenfilter, der in einem Filtergrundkörper aufgenommen ist, wobei an den oberen und unteren Stirnkanten des Faltenfilters jeweils ein U-förmig verlaufendes, streifenförmiges Dichtelement angeordnet ist,
- Fig. 2: eine Fig. 1 entsprechende Darstellung, jedoch mit teilweise entferntem oberen Dichtelement,
- Fig. 3: der Filtereinsatz ohne oberes Dichtelement, mit einer Mehrzahl entlang der U-Form sich erstreckender Stützschlaufen, an denen das Dichtelement angegossen wird,
- Fig. 4: eine stirnseitige Ansicht auf den Filtereinsatz,
- Fig. 5: in schematischer Darstellung die Verbindung zwischen einer Endfalte des Faltenfilters und einer Stirnflanschplatte, die am Filtergrundkörper angeordnet ist,
- Fig. 6: einen Filtergrundkörper einer weiteren Variante eines Gasfiltereinsatzes.

In den Figuren sind gleiche Bauteile mit gleichen Bezugszeichen versehen.

### Ausführungsformen der Erfindung

In den Figuren ist ein Gasfiltereinsatz 1 dargestellt, der als Luftfilter für Brennkraftmaschinen zur Filtration der den Zylindern der Brennkraftmaschine zuzuführenden Verbrennungsluft eingesetzt wird. Der Gasfiltereinsatz 1 ist Bestandteil einer in den Ansaugtrakt der Brennkraftmaschine integrierten Filtereinrichtung.

Der Gasfiltereinsatz 1 umfasst als Filterkörper einen U-förmigen Faltenfilter 2 mit einer Vielzahl einzelner Falten 3 und einen Filtergrundkörper 4, welcher Träger des Faltenfilters 2 ist. Der Filtereinsatz 1 kann in ein Filtergehäuse der Filtereinrichtung eingesetzt werden.

Der Filtergrundkörper 4 als Träger des Faltenfilters 2 ist als einteilig ausgebildetes Kunststoff-Bauteil ausgeführt, das einen Aufnahmeraum zur Aufnahme des U-förmigen Faltenfilters 2 aufweist. Der Aufnahmeraum am Filtergrundkörper 4 erstreckt sich, bezogen auf die Längsachse des Filtereinsatzes, in seitlich außenliegenden Bereichen, welche die beiden Schenkel des Faltenfilters 2 aufnehmen. Der Filtergrundkörper 4 weist zwei beabstandete parallele Schalen 5 und 6 auf, zwischen denen sich ein Hohlfuß 7 erstreckt, welcher zur Aufnahme und Befestigung des Filtereinsatzes 1 im Filtergehäuse dient. Die Schalen 5 und 6 begrenzen den innenliegenden Zwischenraum zwischen den seitlichen Schenkeln des Faltenfilters 2, wobei der innenliegende Zwischenraum den Reinraum bildet, über den das gereinigte Gas axial über eine Abströmöffnung 8 ausgeleitet wird. Der Zwischenraum wird seitens des Faltenfilters 2 durch dessen Innenseite 9 begrenzt. Der Faltenfilter 2 wird im Bereich seiner beiden Schenkel, bezogen auf die Längsachse des Filtereinsatzes 1, radial bzw. in Querrichtung von außen nach innen durchströmt, so dass die Außenseite die Rohseite und der Innenraum zwischen den Schenkeln die Reinseite bildet. Im verbindenden Übergangsabschnitt zwischen den beiden Schenkeln des Faltenfilters 2 erfolgt die Durchströmung je nach Winkelposition in einem kleineren Winkel zur Längsachse bzw. parallel zur Längsachse von außen nach innen.

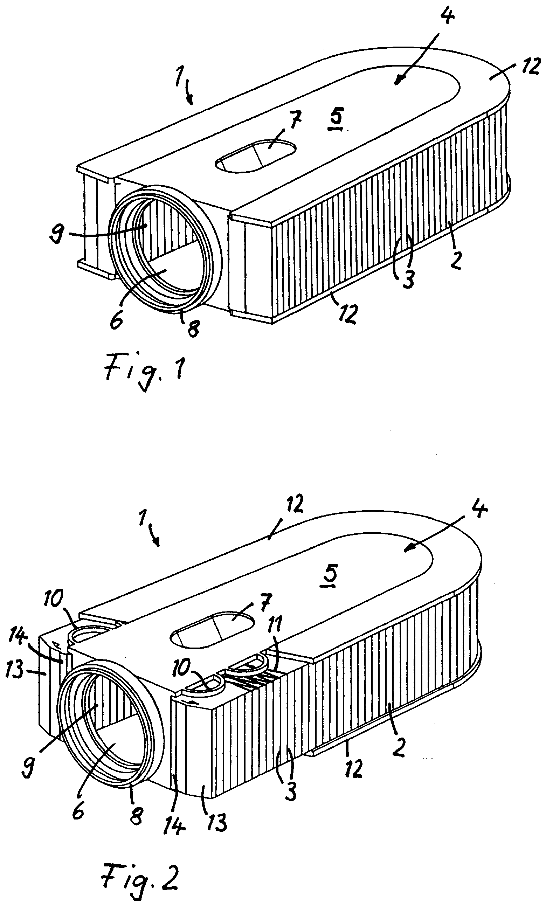

Am Filtergrundkörper 4 sind Stützelemente 10 in Form von Stützschlaufen angeformt, die sich benachbart zu den Stirnkanten 11 (Fig. 2) der Falten des Faltenfilters 2 befinden. Die schlaufenförmigen Stützelemente 10 erstrecken sich über die gesamte U-Form des Aufnahmeraums am Filtergrundkörper 4 und befinden sich sowohl an der Oberseite als auch der Unterseite an den gegenüberliegenden Stirnkanten 11 des Faltenfilters 2, so dass der Faltenfilter nach oben und unten von den Stützelementen 10 begrenzt ist. Die Stützschlaufen 10 sind bogen- bzw. teilkreisförmig ausgebildet, wobei die Bogenseite nach außen weist, und umschließen eine sichelförmige Ausnehmung.

Sowohl entlang der oberen Stirnkanten 11 als auch der gegenüberliegenden, untenliegenden Stirnkanten verläuft jeweils ein streifenförmiges Dichtelement 12, das U-Form aufweist und den Faltenfilter 2 an seinen Stirnkanten vollständig überdeckt. Je eines der streifenförmigen Dichtelemente 12 und eine der Schalen 5, 6 bilden eine Deckscheibe des Filtereinsatzes 1. Das Dichtelement 12 besteht aus einer Dichtmasse, welche den Faltenfilter im Bereich seiner Stirnkanten verschließt, wobei zugleich eine feste Verbindung zwischen dem Dichtelement 12 und dem Material des Faltenfilters 2 gegeben ist. Zusätzlich ist das Dichtelement 12 in den schlaufenförmigen Stützelementen 10 aufgenommen, wodurch eine Verbindung zwischen dem Dichtelement 12 und dem Filtergrundkörper 4 hergestellt wird. Damit ist zugleich auch eine Verbindung zwischen dem Faltenfilter 2 und dem Filtergrundkörper 4 gegeben.

Das Dichtelement 12 besteht aus einer gieß- oder spritzfähigen Dichtmasse bzw. einem entsprechenden Material, beispielsweise einem PUR-Schaum, und wird an die Stützelemente 10 bzw. die Stirnkanten 11 des Faltenfilters 2 angegossen bzw. angespritzt. Somit wird über das Dichtelement 12 eine doppelte Funktion erreicht: Zum einen wird der Faltenfilter im Bereich beider gegenüberliegender Stirnkanten dicht verschlossen, zum anderen wird der Faltenfilter mit dem Filtergrundkörper 4 verbunden.

Die Stützelemente 10 erstrecken sich quer zur Längsachse des Filtereinsatzes 1 nur über einen Teilbereich der Breite des Faltenfilters 2, beispielsweise über die halbe Breite. Dies genügt jedoch, um zum einen den Faltenfilter festzuklemmen und zum anderen eine sichere Verbindung mit dem angegossenen bzw. angespritzten Dichtelement 12 zu schaffen, dessen Dichtmasse auch die sichelförmigen Ausnehmungen in den schlaufenförmigen Stützelementen 10 ausfüllt.

Die beiden Stirnfalten 13 des Faltenfilters 2, welche sich im freien Stirnbereich der beiden Schenkel der U-Form des Faltenfilters befinden, sind jeweils über eine Klebstoffraupe 14 mit einem stirnseitigen Flansch am Filtergrundkörper 4 verklebt. Dadurch ist sichergestellt, dass sich keine Leckageströme zwischen Roh- und Reinseite des Faltenfilters ausbilden können. Der stirnseitige Flansch ist vorteilhafterweise einteilig mit dem Filtergrundkörper 4 ausgeführt. Ggf. kann der stirnseitige Flansch ein separates Bauteil bilden, das mit dem Filtergrundkörper 4 verbunden ist.

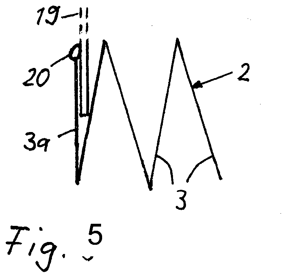

In Fig. 5 ist die Verbindung zwischen einer Endfalte 3a des Faltenfilters 2 mit der Stirnflanschplatte 19 dargestellt. Die Endfalte 3a befindet sich an der Stirnseite der Schenkel des U-förmigen Faltenfilters 2 (Fig. 7). Um Fehlluftströme zwischen Roh- und Reinseite zu verhindern, ist die Endfalte 3a, wie Fig. 5 zu entnehmen, dicht mit der Stirnflanschplatte 19 verbunden, wobei die Endfalte 3a auf der Außenseite der Stirnflanschplatte 19 aufliegen kann und beispielsweise durch Verschweißen, Verkleben oder über ein Dichtelement 20 mit der Stirnflanschplatte verbunden ist. In weiteren Ausführungen kann die Endfalte 3a auch auf der Innenseite mit der Stirnflanschplatte 19 verbunden sein. Des Weiteren ist es möglich, die Verbindung im Bereich der Stirnkante der Stirnflanschplatte herzustellen, indem beispielsweise in die Stirnkante eine Nut eingebracht ist, in die die Endfalte 3a einragt.

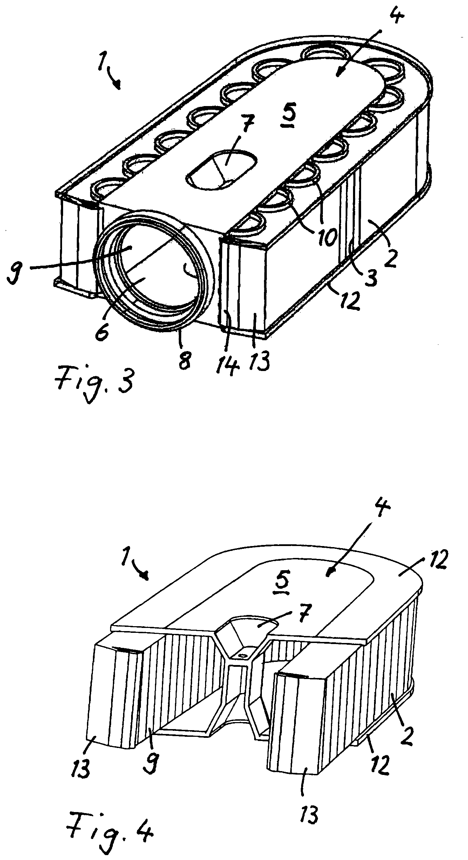

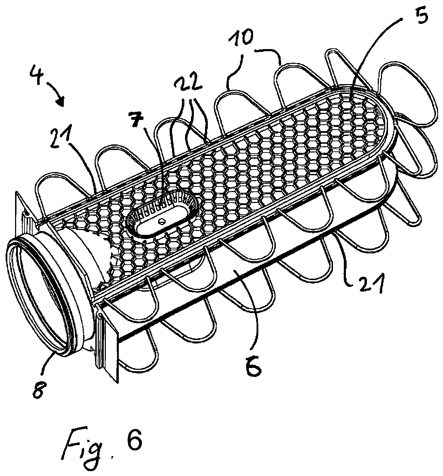

In Fig. 6 ist ein Filtergrundkörper 4 einer weiteren Variante eines Gasfiltereinsatzes 1 gezeigt. Aus Übersichtlichkeitsgründen ist in Fig. 6 nur der Filtergrundkörper 4 gezeigt. Die übrigen Bauteile des Gasfiltereinsatzes 1 sind nicht dargestellt. Sie entsprechend aber in ihrem Aufbau und ihrer Funktion den Bauteilen der Gasfiltereinsätze 1 gemäß den Fig. 1 bis 4. Auch der Filtergrundkörper 4 stimmt weitgehend mit den Filtergrundkörpern 4 aus den Figuren 1 bis 4 überein. Gleiche bzw. ähnliche Bauteile sind daher mit den gleichen Bezugszeichen versehen. Im Wesentlichen zeichnet sich der Filtergrundkörper 4 gemäß Fig. 6 dadurch aus, dass die Verbindung mit den angegossenen bzw. angespritzten Dichtelementen 12 (in Fig. 6 nicht gezeigt) verbessert ist. Zu diesem Zweck ist an der oberen und unteren Schale 5, 6 jeweils eine umlaufende Rippe 21 vorgesehen. An den Rippen 21 sind jeweils die Stützelemente 10 befestigt. Die Rippen 21 weisen eine Vielzahl an Durchbrüchen 22 auf, durch welche das Material der Dichtelemente 12 dringt, wenn diese angegossen oder angespritzt werden. Es ergibt sich eine feste Verkrallung der Dichtelemente 12 mit dem äußeren Rand der Schalen 5, 6.

## Patentansprüche

1. Gasfiltereinsatz, insbesondere Luftfiltereinsatz für eine Brennkraftmaschine, mit einem U-förmigen Faltenfilter (2), der in einem Filtergrundkörper (4) aufgenommen ist, wobei der Filtergrundkörper (4) als einstückiges Bauteil mit einem Aufnahmeraum ausgeführt ist, in den der Faltenfilter (2) einsteckbar ist, wobei der Filtergrundkörper (4) einen Befestigungsfuß (7) aufweist, der sich zwischen einer oberen und einer unteren Schale des Filtergrundkörpers (4) erstreckt und zwischen den Schenkeln des U-förmigen Faltenfilters (2) angeordnet ist, wobei der Aufnahmeraum im Filtergrundkörper (4) zumindest im Bereich der oben und unten liegenden Stirnkanten des Faltenfilters von Deckscheiben überdeckt ist, die mit dem Filtergrundkörper (4) verbunden sind, wobei am Filtergrundkörper (4) mindestens ein Stützelement (10) angeordnet ist, welches einteilig mit dem Filtergrundkörper (4) ausgebildet ist und welches auf den Stirnkanten (11) des Faltenfilters (2) aufliegt, **dadurch gekennzeichnet, dass** mindestens eine Deckscheibe an den Filtergrundkörper (4) angegossen ist und zumindest ein Teil der Deckscheibe an das Stützelement (10) angegossen ist.

2. Gasfiltereinsatz nach Anspruch 1, **dadurch gekennzeichnet, dass** der Befestigungsfuß (7) als Hohlfuß ausgebildet ist.

3. Gasfiltereinsatz nach Anspruch 1 oder 2, **dadurch gekennzeichnet, dass** einteilig mit dem Filtergrundkörper (4) eine Stirnflanschplatte an der Reinseite des Filtereinsatzes angeordnet ist, wobei in die Stirnflanschplatte eine Abströmöffnung (8) eingebracht ist.

4. Gasfiltereinsatz nach Anspruch 3, **dadurch gekennzeichnet, dass** die Abströmöffnung (8) mit einem Stutzen verbunden ist, der als Spritzgussbauteil ausgeführt und an die Flanschplatte angespritzt ist.

5. Gasfiltereinsatz nach Anspruch 2 oder 3, **dadurch gekennzeichnet, dass** die an den Stirnseiten der Schenkeln liegende Endfalte des Faltenfilters (2) mit der Stirnflanschplatte dicht verbunden ist.

6. Gasfiltereinsatz nach Anspruch 5, **dadurch gekennzeichnet, dass** die Endfalte des Faltenfilters (2) mit der Stirnflanschplatte verschweißt, insbesondere an die Außenseite der Stirnflanschplatte angeschweißt ist.

7. Gasfiltereinsatz nach einem der Ansprüche 1 bis 6, **dadurch gekennzeichnet, dass** der Faltenfilter (2) an seinen Stirnkanten dicht abgedichtet ist.

8. Gasfiltereinsatz nach Anspruch 7, **dadurch gekennzeichnet, dass** die Deckscheibe zumindest teilweise als ein Dichtelement (12) ausgeführt ist, dessen Dichtmasse mit den Stirnkanten (11) des Faltenfilters (2) verbunden ist.

9. Gasfiltereinsatz nach Anspruch 7 oder 8, **dadurch gekennzeichnet, dass** das Stützelement (10) als bogenförmige Stützschlaufe ausgebildet ist, die am Filtergrundkörper (4) angeordnet ist.

10. Filtereinrichtung, insbesondere Luftfilter für eine Brennkraftmaschine, mit einem Gasfiltereinsatz (1) nach einem der Ansprüche 1 bis 9.

## Claims

1. Gas filter insert, in particular air filter insert for an internal combustion engine, with a U-shaped folded filter (2) accommodated in a filter base body (4), wherein the filter base body (4) is designed as one-piece component with a receiving space into which the folded filter (2 is insertable, wherein the filter base body (4) features a mounting foot (7) which extends between an upper and a lower shell of the filter base body (4) and which is disposed between the legs of the U-shaped folded filter (2), wherein the receiving space in the filter base body (4) is covered at least in the area of the upper and lower front edges of the folded filter by cover plates which are connected to the filter base body (4), wherein at the filter base body (4) at least one support member (10) is disposed which is designed as one piece with the filter base body (4) and which rests on the front edges (11) of the folded filter (2), **characterized in that** at least one cover plate is cast onto the filter base body (4) and that at least one part of the cover plate is cast onto the support member (10).

2. Gas filter insert according to claim 1, **characterized in that** the mounting foot (7) is designed as hollow foot.

3. Gas filter insert according to claim 1 or 2, **characterized in that** a front flange plate is disposed in one piece with the filter base body (4) on the clean side of the filter insert, wherein an outflow opening (8) is realized in the front flange plate.

4. Gas filter insert according to claim 3, **characterized in that** the outflow opening (8) is connected to a connecting piece which is designed as injection molded part and injected onto the flange plate.

5. Gas filter insert according to claim 2 or 3, **characterized in that** the end fold of the folded filter (2) applied to the front sides of the legs is tightly connected to the front flange plate.

6. Gas filter insert according to claim 5, **characterized in that** the end fold of the folded filter (2) is welded to the front flange plate, in particular to the exterior side of the front flange plate.

7. Gas filter insert according to one of the claims 1 to 6, **characterized in that** the folded filter (2) is tightly sealed at its front edges.

8. Gas filter insert according to claim 7, **characterized in that** the cover plate is at least partially designed as sealing element (12), the sealing compound of which is connected to the front edges (11) of the folded filter (2).

9. Gas filter insert according to claim 7 or 8, **characterized in that** the support member (10) is designed as arc-shaped support loop which is disposed at the filter base body (4).

10. Filtering device, in particular air filter for an internal combustion engine, with a gas filter insert (1) according to one of the claims 1 to 9.

## Revendications

1. Cartouche filtrante à gaz, notamment cartouche filtrante à air pour un moteur à combustion interne, avec un filtre à plis (2) en forme de U logé dans un corps de base du filtre (4), le corps de base du filtre (4) étant réalisé sous forme d'un composant monobloc avec un espace de réception dans lequel le filtre à plis (2) peut être introduit, le corps de base du filtre (4) présentant une bride de fixation (7) qui s'étend entre une coque supérieure et inférieure du corps de base du filtre (4) et qui est disposée entre les branches du filtre à plis (2) en forme de U, l'espace de réception dans le corps de base du filtre (4) étant recouvert, au moins dans la zone des arêtes frontales supérieures et inférieures du filtre à plis, par des disques de recouvrement reliés au corps de base du filtre (4), au moins un élément de soutien (10) étant disposé sur le corps de base du filtre (4) qui est réalisé en un seul bloc avec le corps de base du filtre (4) et qui repose sur les arêtes frontales (11) du filtre à plis (2), **caractérisée en ce qu'**au moins un disque de recouvrement est moulé sur le corps de base du filtre (4) et qu'au moins une partie du disque de recouvrement est moulée sur l'élément de soutien (10).

2. Cartouche filtrante à gaz selon la revendication 1, **caractérisée en ce que** la bride de fixation (7) est réalisée sous forme de bride creuse.

3. Cartouche filtrante à gaz selon la revendication 1 ou 2, **caractérisée en ce qu'**une plaque frontale à bride est disposée en un seul bloc avec le corps de base du filtre (4) sur le côté pur de la cartouche filtrante, un orifice d'évacuation (8) étant réalisé dans la plaque frontale à bride.

4. Cartouche filtrante à gaz selon la revendication 3, **caractérisée en ce que** l'orifice d'évacuation (8) est relié à une tubulure qui est réalisée sous forme de composant moulé par injection et injectée sur la plaque à bride.

5. Cartouche filtrante à gaz selon la revendication 2 ou 3, **caractérisée en ce que** le pli d'extrémité du filtre à plis (2) disposé sur les faces frontales des branches est relié de manière étanche à la plaque frontale à bride.

6. Cartouche filtrante à gaz selon la revendication 5, **caractérisée en ce que** le pli d'extrémité du filtre à plis (2) est soudé à la plaque frontale à bride, notamment soudé à la face externe de la plaque frontale à bride.

7. Cartouche filtrante à gaz selon l'une des revendications 1 à 6, **caractérisée en ce que** le filtre à plis (2) est étanché de manière étanche sur ses arêtes frontales.

8. Cartouche filtrante à gaz selon la revendication 7, **caractérisée en ce que** le disque de recouvrement est réalisé au moins en partie sous forme d'un élément d'étanchéité (12) dont le matériau d'étanchéité est relié aux arêtes frontales (11) du filtre à plis (2).

9. Cartouche filtrante à gaz selon la revendication 7 ou 8, **caractérisée en ce que** l'élément de soutien (10) est réalisé sous forme d'une boucle de soutien arquée disposée sur le corps de base du filtre (4).

10. Dispositif de filtration, notamment filtre à air pour un moteur à combustion interne, avec une cartouche filtrante à gaz (1) selon l'une des revendications 1 à 9.
